# EUROPEAN PATENT SPECIFICATION

(11) **EP 3 767 137 B1**
(45) Date of publication and mention of the grant of the patent: **01.11.2023**
(21) Application number: 18910186.8
(22) Date of filing: 14.03.2018
(51) Int. Cl.: F16J 15/10, F25B 41/00, F16J 15/06, F16J 15/08, F16L 23/18

(54) **GASKET AND REFRIGERATION CYCLE DEVICE**
DICHTUNG UND KÄLTEKREISLAUFVORRICHTUNG
JOINT D'ÉTANCHÉITÉ ET DISPOSITIF À CYCLE DE RÉFRIGÉRATION

(43) Date of publication of application: 20.01.2021
(73) Proprietor: Mitsubishi Electric Corporation, Tokyo 100-8310 (JP)
(72) Inventor: MAEDA, Katsuya, Tokyo 100-8310 (JP); YAMAKAWA, Hiroyuki, Tokyo 100-8310 (JP); UENAKAI, Naoto, Tokyo 100-8310 (JP); KAMIKAWA, Masaaki, Tokyo 100-8310 (JP)
(74) Representative: Pfenning, Meinig & Partner mbB
(86) International application number: PCT/JP2018/009947
(87) International publication number: WO 2019/176005

(56) References cited:
- JP-A- 2014 224 579
- JP-A- 2016 136 049
- JP-U- H04 105 668
- US-A1- 2003 080 518
- US-A1- 2008 063 550
- US-A1- 2009 068 027
- US-B1- 6 481 722
- US-B1- 6 948 717
- US-B2- 6 682 081

## Description

### Technical Field

The present disclosure relates to a gasket for use in a connection portion between pipes through which fluid flows, particularly to a shape of the gasket that positions the gasket itself, and to a refrigeration cycle apparatus using the gasket.

### Background Art

In the related art, at a coupling portion between a component of a refrigeration cycle apparatus, for example, a compressor, an oil separator, or a heat exchanger, and an associated one of pipes that connect these components, a gasket is put in and held between seal surfaces of flanges provided at the coupling portion, and the flanges are fastened using, for example, bolts and nuts, thereby preventing leakage of refrigerant that flows through the pipes. Since gaskets are inexpensive and can be formed into relatively complicated shapes, they are widely used in refrigeration cycle apparatuses and other apparatuses that handle fluid (see, for example, Patent Literature 1).

Patent Literature 2 relates to a reciprocating fluid machine including a cylinder block arranged inside a casing shell and having cylinder bores, a cylinder head fastened to the casing shell, a valve plate interposed between the cylinder block and the cylinder head each with a gasket therebetween, and a fastening device for fastening the valve plate to the cylinder block. The fastening device includes outer tapped holes formed in the cylinder block, and outer fastening bolts extending from the cylinder head side through the valve plate and the gaskets and screwed into the respective outer tapped holes. The outer fastening bolts have axes located outward of a bore distribution circle on which the axes of the cylinder bores are located, as viewed in the radial direction of the cylinder block, and have bolt heads located inside the cylinder head.

### Citation List

### Patent Literature

Patent Literature 1: Japanese Patent No. 4799763
Patent Literature 2: US Patent Application US 2009/068027 A1

### Summary of Invention

### Technical Problem

Many of low-GWP refrigerants (HFO-based refrigerants) intended to reduce global warming are slightly flammable. It is therefore necessary to pay more attention to leakage of these refrigerants than to that of nonflammable refrigerants such as R22, R134a, R404A, and R407C. Furthermore, in the case of using the above slightly flammable refrigerants, in some cases, it is necessary to improve the sealing at the coupling portion. According to the revised Fluorocarbons Law, simple test items listed for refrigeration cycle apparatuses include those regarding not only refrigerant leakage but the ooze of oil. This implies that the improvement of the sealing at the coupling portion is an important subject in the manufacturing of refrigeration apparatuses and airconditioning apparatuses.
This technical problem is solved by the invention according to claim 1.

Under such circumstances, in order that the sealing at the coupling portion be improved by changing the material of the gasket as disclosed by Patent Literature 1, it was necessary to verify and evaluate the gasket regarding the resistance to refrigerant, the resistance to oil, and the durability, and such verification and evaluation needed a great deal of labor. In view of this, in order to improve the sealing at the coupling portion, the following measures are currently taken as methods of improving the sealing without changing the material of the gasket.
(1) Sealing surface pressure is increased by increasing the torque of bolts for use in fastening of the gasket.
(2) Sealing surface pressure is locally increased by providing projections on flange surfaces that face the gasket.
(3) Sealing surface pressure is increased by reducing the area of the gasket.

It should be noted that the sealing surface pressure is expressed as "sealing surface pressure = total fastening force exerted by bolts *l* area of gasket".

In the case of applying the above measure (1), the fastening torque exerted by a bolt is mostly determined in accordance with the size and the material of the bolt. Therefore, the fastening force exerted by the bolts cannot be increased greatly. Inevitably, the sealing surface pressure cannot be effectively improved. Moreover, when the fastening torque increases, the stress that acts on the bolt also increases. It is therefore necessary to verify whether fatigue breakdown of the bolt occurs or not while the apparatus such as the refrigeration cycle apparatus is in operation.

In the case of applying the measure (2), the contact surface pressure at a contact portion between each projection and the gasket is increased. Thus, the sealing surface pressure can be increased. However, a processing cost for providing the projections on the flanges at the coupling portion is increased. Furthermore, if the coupling portion is small, the flanges need to be made larger in order to provide projections thereon. Thus, the flanges made larger interfere with other components.

In the case of applying the measure (3), the sealing surface pressure can be increased by changing the shape of the gasket, which is relatively inexpensive and can be formed into a complicated shape. However, in general, the area of the gasket and the seal distance are proportional to each other. Thus, as the area of the gasket decreases, the seal distance decreases, and the sealing surface pressure thus increases. However, although it depends on the accuracy of the seal surfaces of the flanges, sealing is not improved, and leakage easily occurs. It should be noted that the seal distance is the length of a leakage passage having the smallest length that is present in the gasket held by the flanges, that is, the length of a passage in which fluid leaks from the gasket via the shortest route. The seal distance is set in comprehensive consideration of the surface roughness and the flatness of the seal surfaces of the flanges, the type of the gasket, the pressure in the pipes, the sealing surface pressure, etc. If the area of the gasket is decreased to increase the sealing surface pressure, the gasket is hard to position since the gasket is small. Consequently, the gasket is not provided at a proper position, and as a result the sealing is worsened.

The present disclosure relates to a gasket that is formed to have a smaller area to improve sealing, while ensuring a given seal distance, and can be easily positioned, and also to a refrigeration cycle apparatus using the gasket.

### Solution to Problem

According to an embodiment of the present disclosure (not claimed), a gasket is provided at a connection portion where passages through which fluid flows are connected with each other. The gasket is formed of a plate having a hole that causes the passages to communicate with each other. The gasket includes: a positioning portion that is provided close to the hole and positions along with a bolt the gasket; and a punched portion that is provided between the holes and the positioning portion, and extends through the plate. The positioning portion has an arc shape that conforms to part of a circumference of the bolt.

According to another embodiment of the present disclosure (not claimed), a gasket is provided at a connection portion where passages through which fluid flows are connected with each other. The gasket is formed of a plate having a hole that cause the passages to communicate with each other. The gasket includes: a positioning portion that is provided close to the hole, and positions along with a bolt, the gasket; and a joining portion connecting the hole and the positioning portion. The positioning portion has an arc shape that conforms to a circumference of the bolt. The plate has an area that is smaller than an area of a surface of the connection portion with which the plate is brought into contact.

### Advantageous Effects of Invention

According to each of the embodiments of the present disclosure, the sealing surface pressure can be increased without changing the shape and the size of the coupling portion, and the sealing at the coupling portion between passages through which flammable fluid flows can be increased. Therefore, the safety of the apparatus can be increased. Furthermore, since the sealing at the coupling portion can be effectively increased by using a gasket, which is inexpensive, the cost required for ensuring safety can be reduced.

### Brief Description of Drawings

[Fig. 1] Fig. 1 is a diagram illustrating a configuration of a refrigeration cycle apparatus including a gasket according to Embodiment 1.
[Fig. 2] Fig. 2 is a plan view of the gasket according to Embodiment 1 (not claimed), which is provided at a joining portion between a solenoid valve attached to a compressor of the refrigeration cycle apparatus and the compressor.
[Fig. 3] Fig. 3 is a plan view of a gasket of a comparative example to be compared with the gasket according to Embodiment 1.
[Fig. 4] Fig. 4 is a plan view of a gasket that is a modification of the gasket according to Embodiment 1 (not claimed).
[Fig. 5] Fig. 5 is an outside view of a compressor to which the gasket as illustrated in Fig. 4 is applied.
[Fig. 6] Fig. 6 is a plan view of a gasket that is another modification of the gasket according to Embodiment 1 (not claimed).
[Fig. 7] Fig. 7 is a plan view of a gasket according to Embodiment 2 (not claimed).
[Fig. 8] Fig. 8 is a plan view of a gasket that is a modification of the gasket according to Embodiment 2 (not claimed).
[Fig. 9] Fig. 9 is a plan view of a gasket according to Embodiment 3 (as claimed), which is provided at the joining portion between the solenoid valve attached to the screw compressor of the refrigeration cycle apparatus and the screw compressor.

### Description of Embodiments

### Embodiment 1 (not claimed)

Embodiment 1 will now be described with reference to the drawings. In each of figures to be referred to below, components that are the same as or equivalent to those in a previous figure will be denoted by the same reference numerals. The same is true of the entire text of the specification relating to embodiments that will be described later. The configurations of components described in the entire text of the specification are merely examples; that is, the configurations of the components are not limited to the described configurations. In particular, combinations of components are not limited to those of components described regarding each of the embodiments. Components described regarding an embodiment may be applied to another embodiment as appropriate. Furthermore, whether the pressure is high or low is not determined based on a relationship with an absolute value, and is determined based on a relative relationship regarding the state, the operation, etc. of a system, an apparatus, etc. Furthermore, regarding a plurality of components that are of the same type and distinguished from each other by reference signs including suffixes, in the case where components do not need to be specified or distinguished from each other, suffixes may be omitted from reference signs denoting the components.

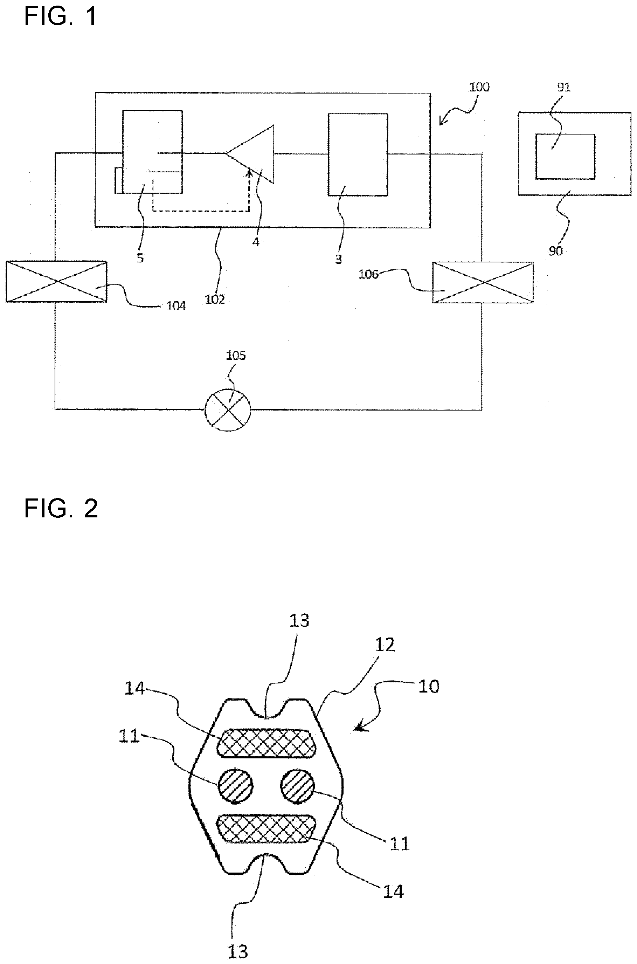

Fig. 1 is a diagram illustrating a configuration of a refrigeration cycle apparatus 100 provided with gaskets 10 according to Embodiment 1. In the refrigeration cycle apparatus 100, for example, a screw compressor 102, a condenser 104, an expansion valve 105, and an evaporator 106 are connected by pipes. The following description is made on the premise that the screw compressor is a component included in a refrigerant circuit in the refrigeration cycle apparatus 100, and fluids to be sucked, compressed, and discharged are refrigerant and oil.

Referring to Fig. 1, the screw compressor 102 includes an oil separator 5 provided therein. However, the oil separator 5 may be provided separate from the screw compressor 102. As the oil separator 5, any of various types of oil separators, for example, a demister type oil separator and a cyclone type oil separator can be applied. The type of the compressor 4 included in the screw compressor is not limited, and the compressor 4 may be, for example, a single-screw compressor, a twin-screw compressor, a scroll compressor, or a reciprocating compressor. The compressor 4 will be described by way of example as a compressor that is driven by an inverter. However, as the compressor 4, a compressor that is driven at a constant speed may be used.

An inverter device 91 controls the supply of power to the screw compressor 102 based on a specified frequency, and also controls the driving frequency of the screw compressor 102. The screw compressor 102 is driven by electric power supplied from a power source (not illustrated) via the inverter device 91. The condenser 104 cools and thus condenses high-temperature, high-pressure gas refrigerant discharged from the screw compressor 102. The expansion valve 105, which operates as a pressurereducing device, reduces the pressure of liquid refrigerant discharged from the condenser 104 to expand the liquid refrigerant. The evaporator 106 evaporates the refrigerant that has flowed through the expansion valve 105. The refrigeration cycle apparatus 100 further includes a controller 90. The controller 90 controls the frequency of the inverter device 91, the opening degree of the expansion valve 105, etc., and transmits signals to various devices to control the devices.

The gaskets 10 can be used at a coupling portion between pipes included in the refrigeration cycle apparatus 100 and at joining portions 107 between components provided at an outer shell of the screw compressor 102. For example, in many cases, refrigerant leakage and the ooze of oil from the coupling portion and the joining portion 107 easily occur particularly at joining surfaces of relatively small components. It should be noted that the coupling portion and the joining portion 107 will be collectively referred to as "connection portion". At a connection portion between small components, the size of bolts for use in fastening seal surfaces of the connection portion is small, and the force of fastening the connection portion is therefore small. Furthermore, if the area of each of the gaskets 10 is reduced to increase a sealing surface pressure, a satisfactory seal distance cannot be ensured. It should be noted that the coupling portion is provided at a location where pipes are connected to each other or a pipe and an element included in the refrigeration cycle apparatus 100 are connected to each other. Specifically, for example, flanges are formed at respective ends of the pipes, and the flanges are mated with each other and fastened to each other by using bolts and nuts, whereby the coupling portion is formed. Each of the gaskets 10 is provided between seal surfaces of the flanges and thus reduces the leakage of fluid, such as refrigerant, that flows through the pipes and the ooze of oil.

Fig. 2 is a plan view of the gasket 10 according to Embodiment 1, which is provided at the joining portion 107 between a solenoid valve attached to the screw compressor 102 of the refrigeration cycle apparatus 100 and the screw compressor 102. The gasket 10 is a single plate and is formed of materials such as metal and resin. The gasket 10 has two gas holes 11 that are provided in a central portion of the gasket 10 and that allow gas refrigerant to flow. Each of the gas holes 11 is provided in such a manner to ensure a seal distance that is the distance from each gas hole 11 to an outer periphery 12 thereof, that is, the shortest distance from each gas hole 11 to the outside of the gasket 10. Furthermore, the gasket 10 has positioning portions 13 that position the gasket 10 at the joining portion 107 between the solenoid valve and the screw compressor 102. The positioning portions 13 are provided symmetrical and formed in an outer periphery of the plate that forms the gasket 10. The positioning portions 13 each have an arc shape such that each positioning portion 13 is shaped along an outer peripheral surface of an associated one of bolts that fasten the joining portion 107.

Punched portions 14 are each provided between an associated one of the positioning portions 13 and the gas holes 11. The punched portions 14 each extend through the plate that forms the gasket 10 to reduce the area of the gasket 10 and thus increase the sealing surface pressure. In the related art, however, a predetermined sealing surface pressure cannot necessarily be ensured only by providing the punched portions 14. In view of this point, the plate that forms the gasket 10 according to Embodiment 1 has semicircular recesses, instead of holes for insertion of bolts, such that the recesses are each formed in an outer periphery of the plate and extend toward the gas holes 11.

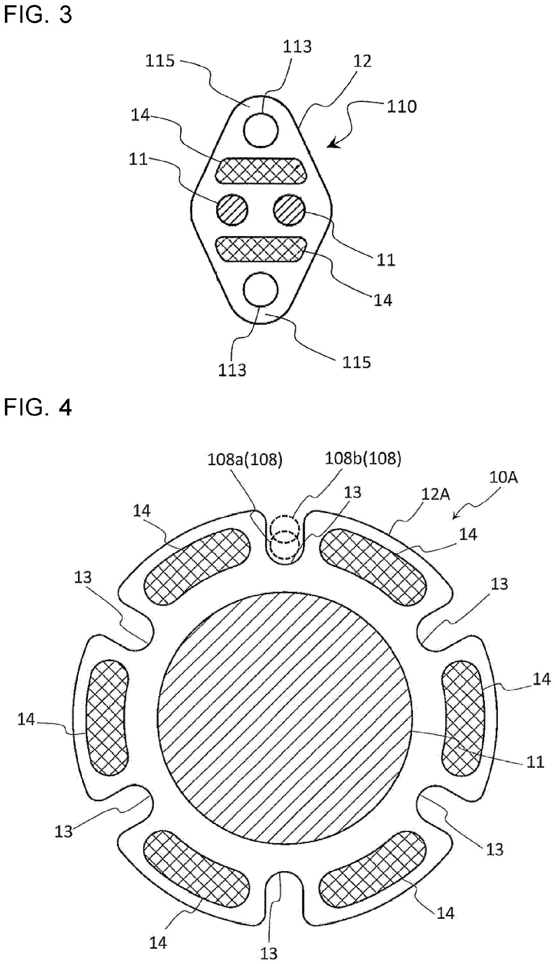

Fig. 3 is a plan view of a gasket 110 of a comparative example to be compared with the gasket 10 according to Embodiment 1. The gasket 110 is different from the gasket 10 according to Embodiment 1 in portions corresponding to the positioning portions 13. The gasket 110 has bolt holes 113 for insertion of bolts that fasten the joining portion 107. The gasket 110 is positioned by inserting the bolts into the respective bolt holes 113. The bolt holes 113 are shaped to allow the bolts to be inserted thereinto, and thus each surround the entire circumference of an associated one of the bolts. Since the gasket 110 includes portions 115 that are located outward of the bolt holes 113, the gasket 110 has a greater area than the gasket 10 according to Embodiment 1 by the areas of the portions 115. Therefore, in the gasket 110 of the comparative example, the area of the gasket 110, on which a load of fastening the joining portion 107 with the bolts is applied, is large, and the sealing surface pressure is low, as compared with the gasket 10 according to Embodiment 1.

In general, bolt holes are provided as in the gasket 110 having the bolt holes 113. By contrast, unlike the gasket 110 of the comparative example, in the gasket 10 according to Embodiment 1, each of the positioning portions 13 does not surround the entire circumference of the associated bolt. The positioning portions 13 are shaped to have the smallest possible area and only to enable the gas holes 11 to be aligned with flow passages for the fluid that are provided in the joining portion 107. Therefore, the area of the gasket 10 can be minimized. Furthermore, in the gasket 10 according to Embodiment 1, since the seal distance is not made smaller than that in the gasket 110 of the comparative example, the sealing performance can be further improved than in the gasket 110 of the comparative example if the fastening force exerted by bolts is equivalent to that in the gasket 10 of the comparative example. It should be noted that there are two paths in which refrigerant leaks from the gasket and oil oozes from the gasket. One of the two paths is located between the flange and a gasket surface, and the other extends through the gasket. In these two paths, the gas leak and the ooze of oil can be reduced by increasing the sealing surface pressure.

A modification of the gasket 10 according to Embodiment 1 will be described.

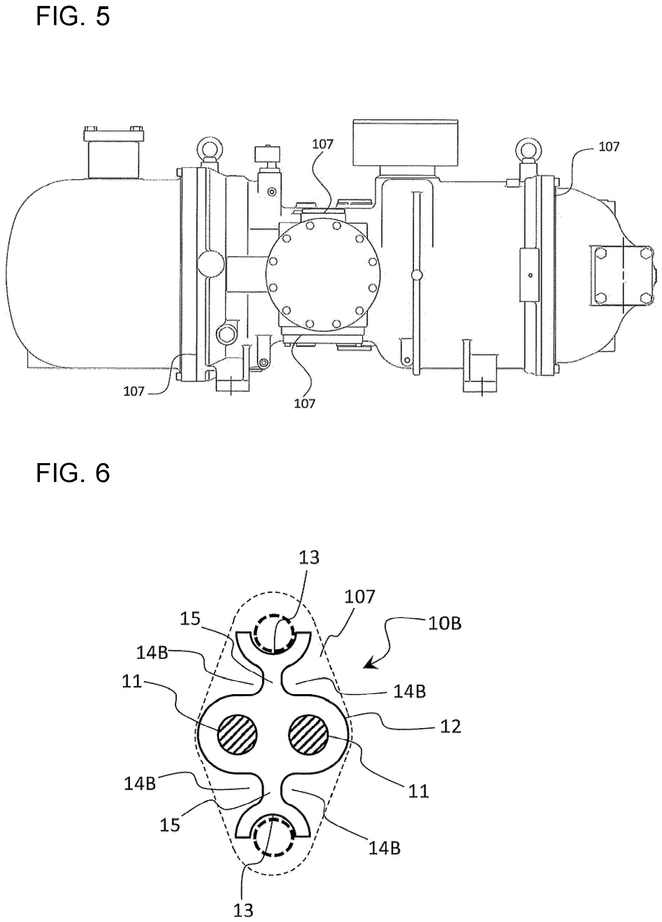

Fig. 4 is a plan view of a gasket 10A that is a modification of the gasket 10 according to Embodiment 1. Fig. 5 is an external view of a screw compressor 102 to which the gasket 10A as illustrated in Fig. 4 is applied. Gaskets 10A are used at, for example, joining portions 107 where components forming the outer shell of the screw compressor 102 as illustrated in Fig. 5 are joined.

The gaskets 10A are each used to prevent refrigerant or oil in the screw compressor 102 from leaking from the screw compressor 102 to the outside thereof. The gasket 10A has gas holes 11 that are formed in a central part of the gasket 10A, and positioning portions 13 that are located close to the gas holes 11. The gas holes 11 of the gasket 10A are larger than the gas holes 11 of the gasket 10 according to Embodiment 1. Therefore, at each of the joining portions 107, many bolts are provided to ensure a sufficient sealing surface pressure. To be more specific, the positioning portions 13 of the gasket 10A are arranged such that the positioning portions 13 can position along with six bolts provided at the joining portion 107, the gasket 10A.

The positioning portions 13 of the gasket 10A are continuous with an outer periphery 12A of the gasket 10A as in the gasket 10. The positioning portions 13 each have an arc shape that conforms to the circumference of a bolt 108 and are each positioned between the bolt 108 and the gas hole 11. To be more specific, on a circle curved with respect to the gas hole 11, six positioning portions 13 are arranged at regular intervals. Therefore, the gasket 10A may be positioned at not only the position of a bolt 108a but the position of a bolt 18a as illustrated in Fig. 4.

Fig. 6 is a plan view of a gasket 10B that is another modification of the gasket 10 according to Embodiment 1. Gaskets 10B as well as the gaskets 10 are used at the joining portions 107 between the solenoid valve attached to the screw compressor 102 of the refrigeration cycle apparatus 100 and the screw compressor 102.

The gaskets 10B each has two gas holes 11 and two positioning portions 13, as well as the gasket 10. More specifically, the positioning portions 13 are provided symmetrical and formed in the outer periphery of the gasket 10, and each have an arc shape that conforms to part of the circumferential surface of an associated one of bolts with which the joining portion 107 is fastened.

However, the gasket 10B has no punched portions 14 at part of the plate forming the gasket 10B, which is located inward of an outer peripheral portion of the plate forming the gasket 10B. The outer peripheral portion of the plate is greatly curved inwardly, and the gasket 10 has joining portions 15 each extending between a region where the two gas holes 11 are provided and an associated one of the positioning portions 13. The joining portions 15 extend on an imaginary line that connects the midpoint between the two gas holes 11 and the positioning portions 13. In such a configuration, the gasket 10B is smaller than a surface of the joining portion 107 with which the gasket 10B is brought into contact. Therefore, the sealing surface pressure can be further increased.

### Embodiment 2 (not claimed)

A gasket 210 according to Embodiment 2 has portions that are a modification of the positioning portions 13 of the gasket 10 according to Embodiment 1. Embodiment 2 will be described by referring mainly to the difference between Embodiments 1 and 2.

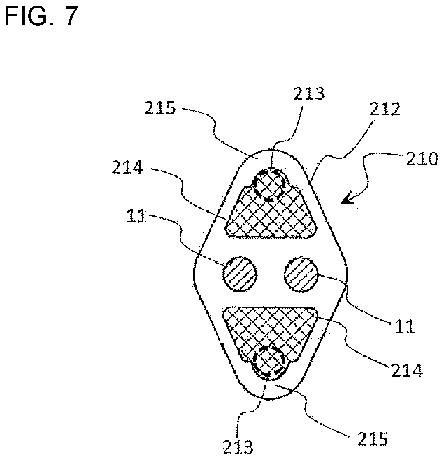

Fig. 7 is a plan view of the gasket 210 according to Embodiment 2. Gaskets 210 as well as the gaskets 10 according to Embodiment 1 are applied to the joining portions 107 between the solenoid valve attached to the screw compressor 102 of the refrigeration cycle apparatus 100 and the screw compressor 102.

The gaskets 210 as well as the gaskets 10 according to Embodiment 1 are each a single plate and is formed of, for example, metal or resin. The gasket 210 further has two gas holes 11 that are provided in a central part of the gasket 210 and allow gas refrigerant to flow. Furthermore, the gasket 210 has positioning portions 213 that position the gasket 210 at the joining portion 107. The positioning portions 213 each have an arc shape that conforms to part of the circumference of a bolt that is located on a side of the bolt that is farther from the gas holes 11. That is, the bolt is provided between an associated one of the positioning portions 213 and the gas holes 11.

The positioning portions 213 are each formed continuous with a peripheral edge of an associated one of punched portions 214. That is, the positioning portions 213 are formed integrally with the respective punched portions 214 of the gasket 210. The gasket 210 is positioned by part of the punched portions 214 and bolts. Thus, the gasket 210, into which the bolts are inserted at the time of assembly, is not easily fall off the seal surfaces of the joining portion 107, and the workability is improved. Therefore, use of the gasket 210 is particularly advantageous in the case where pipes are connected at a place where a connecting work is hard to perform.

The gasket 210 is larger in outer shape than the gasket 10 according to Embodiment 1 by portions 215 located outward of the bolts. However, since the positioning portions 213 and the respective punched portions 214 are integrated with each other, the sealing area of the gasket 210 can be made equivalent to that of the gasket 10 according to Embodiment 1. Furthermore, although it depends on the shape of the gasket 210, it is possible to make the punched portions 214 larger than those of the gasket 10 according to Embodiment 1. In that case, the sealing performance can be further improved.

A modification of the gasket 210A according to Embodiment 2 will be described.

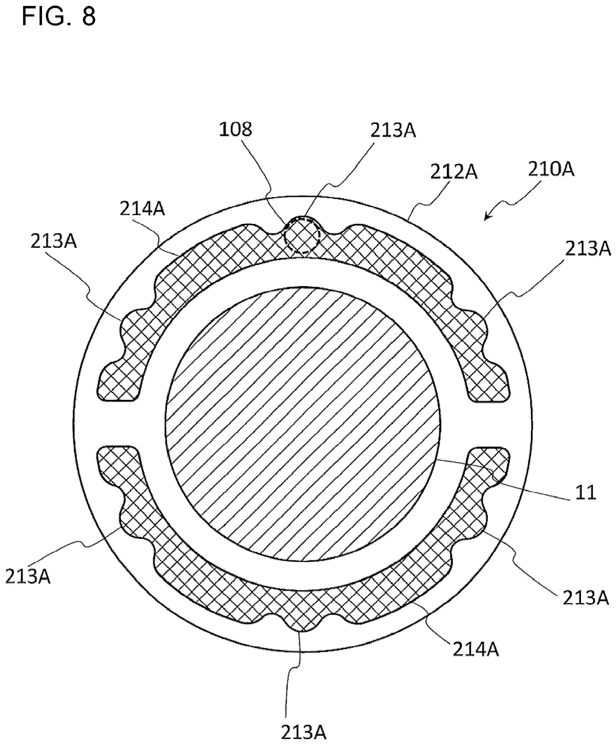

Fig. 8 is a plan view of a gasket 210A that is a modification of the gasket 210 according to Embodiment 2. Gaskets 210A are used at, for example, joining portions 107 where components forming the outer shell of the screw compressor 102 as illustrated in Fig. 5 are joined.

The gaskets 210A are each used to prevent the refrigerant or the oil in the screw compressor 102 from leaking from the screw compressor 102 to the outside thereof. The gasket 10A has a gas hole 11 that is formed in a central part thereof, and positioning portions 13 around the gas hole 11. At each of the joining portion 107, many bolts are provided to ensure a sufficient sealing surface pressure. The positioning portions 213 of the gasket 210A are arranged such that the positioning portions 213 can position along with six bolts provided at the joining portion 107, the gasket 210A.

The positioning portions 213 of the gasket 210A as well as those of the gasket 210 are each formed continuous with the peripheral edge of an associated one of punched portions 214A of the gasket 10A. The positioning portions 213 each have an arc shape that conforms to the circumference of an associated bolt 108. The bolt 108 is provided between the positioning portion 213 and the gas hole 11. To be more specific, on a circle curved with respect to the gas hole 11, six positioning portions 213 are arranged at regular intervals. Furthermore, the gasket 210A has two punched portions 214A, which are each provided with three positioning portions 213. In such a configuration, the area of each punched portion 214A is set to the greatest possible area with respect to the area of the gasket 210A. Thus, the sealing performance by the gasket 210A can be easily improved.

The gaskets 210 and 210A can each have a greater seal distance than the gaskets 10 and 10A according to Embodiment 1. Therefore, the gaskets 210 and 210A can achieve further improved sealing performance.

### Embodiment 3 (as claimed)

In a gasket 310 according to Embodiment 3, the positioning portions 13 of the gasket 10 according to Embodiment 1 and the outer shape of the gasket 10 are modified. Embodiment 3 will be described by referring mainly to the differences between Embodiments 1 and 3.

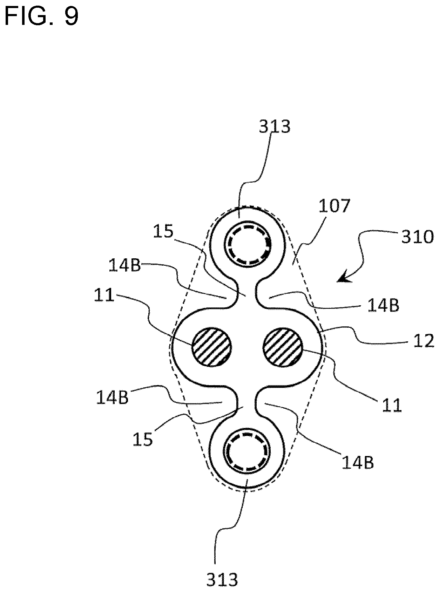

Fig. 9 is a plan view of the gasket 310 according to Embodiment 3, which is provided at the joining portion 107 between the solenoid valve attached to the screw compressor 102 of the refrigeration cycle apparatus 100 and the screw compressor 102. In the gasket 310, the positioning portions 13 of the gasket 10B according to Embodiment 1 are modified. To be more specific, as illustrated in Fig. 9, the gasket 310 includes positioning portions 313 each of which surrounds the entire circumference of an associated bolt 108. Therefore, the gasket 310 does not easily fall off the joining portion 107 when attached to the joining portion 107. Thus, assembly can be easily achieved. It should be noted that the dotted line in Fig. 9 indicates the shape of the joining portion 107.

### Reference Signs List

4 compressor 5 oil separator 10 gasket 10A gasket 10B gasket 11 gas hole 12 outer periphery 12A outer periphery 13 positioning portion 14 punched portion 15 connection portion 90 controller 91 inverter device 100 refrigeration cycle apparatus 102 screw compressor 104 condenser 105 expansion valve 106 evaporator 107 joining portion 108 bolt 108a bolt 108b bolt 110 gasket 113 bolt hole 115 portion 210 gasket 210A gasket 213 positioning portion 214 punched portion 214A punched portion 215 portion 310 gasket 313 positioning portion

## Claims

1. A refrigeration cycle apparatus (100) comprising a connection portion and a gasket (310) provided at the connection portion where passages through which fluid flows are connectable with each other, the gasket being formed of a plate having two holes (11) configured to cause the passages to communicate with each other, the gasket comprising:
positioning portions (313) provided close to the holes (11), and configured to position along with bolts (108), the gasket; and
two joining portions (15) connecting the holes (11) and the positioning portions (313),
wherein the positioning portions (313) have circular shapes that conform to entire circumferences of the bolts (108), and
**characterised in that**
the plate has an area that is smaller than an area of a surface of the connection portion with which the plate is brought into contact,
wherein the two joining portions (15) extend on one imaginary line that connects the midpoint between the two gas holes (11) and the positioning portions (13).

## Patentansprüche

1. Kältekreislaufvorrichtung (100), umfassend einen Verbindungsabschnitt und eine Dichtung (310), die an dem Verbindungsabschnitt vorgesehen ist, wo Durchlässe, durch welche Fluid strömt, miteinander verbunden werden können, wobei die Dichtung aus einer Platte mit zwei Löchern (11) gebildet ist, die ausgelegt sind, zu bewirken, dass die Durchlässe miteinander kommunizieren, wobei die Dichtung umfasst:
Positionierungsabschnitte (313), die in der Nähe der Löcher (11) vorgesehen sind und ausgelegt sind, zusammen mit Bolzen (108) die Dichtung zu positionieren; und
zwei Zusammenführungsabschnitte (15), welche die Löcher (11) und die Positionierungsabschnitte (313) verbinden,
wobei die Positionierungsabschnitte (313) kreisförmige Formen haben, die den gesamten Umfängen der Bolzen (108) entsprechen, und
**dadurch gekennzeichnet, dass**
die Platte eine Fläche hat, die kleiner ist als eine Fläche einer Oberfläche des Verbindungsabschnitts, mit welchem die Platte in Kontakt gebracht wird,
wobei sich die zwei Zusammenführungsabschnitte (15) auf einer imaginären Linie erstrecken, welche den Mittelpunkt zwischen den zwei Gaslöchern (11) und den Positionierungsabschnitten (13) verbindet.

## Revendications

1. Appareil à cycle de réfrigération (100) comprenant une partie de connexion et un joint (310) ménagé au niveau de la partie de connexion où les passages à travers lesquels le fluide s'écoule peuvent être reliés l'un à l'autre, le joint étant formé d'une plaque dotée de deux trous (11) configurés pour faire communiquer les passages l'un avec l'autre, le joint comprenant :
des parties de positionnement (313) situées à proximité des trous (11) et configurées pour positionner le joint avec les boulons (108) ; et
deux parties de jonction (15) reliant les trous (11) et les parties de positionnement (313),
dans lequel les parties de positionnement (313) présentent des formes circulaires qui s'adaptent aux circonférences entières des boulons (108), et
**caractérisé en ce que**
la plaque présente une superficie inférieure à une superficie d'une surface de la partie de connexion avec laquelle la plaque est mise en contact,
dans lequel les deux parties de jonction (15) s'étendent sur une ligne imaginaire qui relie le point médian entre les deux trous de gaz (11) et les parties de positionnement (13).
